(19) Europäisches Patentamt
European Patent Office
Office européen des brevets

(11) **EP 3 504 772 B1**

(12) **EUROPÄISCHE PATENTSCHRIFT**

(45) Veröffentlichungstag und Bekanntmachung des Hinweises auf die Patenterteilung:
**08.07.2020  Patentblatt 2020/28**

(21) Anmeldenummer: **16785395.1**

(22) Anmeldetag: **13.10.2016**

(51) Int Cl.:
***H02J 13/00*** *(2006.01)*

(86) Internationale Anmeldenummer:
**PCT/EP2016/074572**

(87) Internationale Veröffentlichungsnummer:
**WO 2018/068855 (19.04.2018 Gazette 2018/16)**

(54) **TRANSPORT- UND VERTEILNETZ**

TRANSPORT AND DISTRIBUTION NETWORK

RÉSEAU DE TRANSPORT ET DE DISTRIBUTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.07.2019  Patentblatt 2019/27**

(73) Patentinhaber: **Siemens Aktiengesellschaft 80333 München (DE)**

(72) Erfinder:
• **MITTELSTÄDT, Sebastian 81541 München-Haidhausen (DE)**
• **SANDER, Sonja 80797 München (DE)**
• **OELKE, Daniela 85521 Riemerling (DE)**
• **PLATZ, Axel 81479 München (DE)**
• **JÄGER, Alexander 78462 Konstanz (DE)**

(56) Entgegenhaltungen:
**EP-A2- 1 248 357      WO-A1-2015/180766 US-A1- 2014 281 645**

EP 3 504 772 B1

**Beschreibung**

Die vorliegende Erfindung betrifft ein Transport- und Verteilnetz und ein Verfahren zum Betreiben eines Transport- und Verteilnetzes.

Elektrische Transport- und Verteilnetze sind komplex aufgebaut. Zum einen umfasst das Netz eines Netzbetreibers mehrere hunderttausend Einzelkomponenten unterschiedlichen Typs, wie beispielsweise Leitungen, Umspannwerke, Transformatoren, Isolatoren, Generatoren oder Sammelschienen. Zum anderen sind diese Einzelkomponenten inhomogen in Bezug auf ihre Eigenschaften, wie beispielsweise Hersteller, Typ und Baujahr.

Hinzu kommt, dass der Verwendungskontext der Einzelkomponenten sich über die Zeit hinweg ändert, wie beispielsweise durch Zuzug/Wegzug von Kunden oder einer Entstehung von neuen Industriegebieten. Vor allem die eingeleitete Energiewende stellt die Netzbetreiber vor neue Herausforderungen, da in der Vergangenheit viele Einzelkomponenten des Transport- und Verteilnetzes noch nicht für eine Einspeisung aus dem Nieder- und Mittelspannungsnetz ausgelegt worden sind.

Daher ist es für einen Netzbetreiber schwierig, einen Überblick über den Gesamtzustand des Transport- und Verteilnetzes zu erhalten und Schwachstellen im Netz, wie beispielsweise Einzelkomponenten mit hohem Verschleiß zu identifizieren.

Als Konsequenz erfolgen die Wartung und der Austausch von Einzelkomponenten des Transport- und Verteilnetzes in festen zeitlichen Abständen, anstatt anhand des tatsächlichen Bedarfs.

Dies führt zum einen dazu, dass Einzelkomponenten mit einem erhöhten Ausfallrisiko zu spät erkannt werden und ungeplant ausfallen, so dass eine erhöhte Störungswahrscheinlichkeit des gesamten Transport- und Verteilnetzes resultiert.

Zum anderen entsteht ein erhöhter technischer Aufwand, da Einzelkomponenten getauscht oder gewartet werden, obwohl deren tatsächliche Nutzung es noch nicht erforderlich machen würde. Allerdings ist ein Netzbetreiber hinsichtlich eines Aufwandes für die Wartung daran interessiert, dass der größtmögliche Nutzen für die Netzsicherheit und -Stabilität erreicht wird.

Die Druckschrift US 2014/281 645 A1 betrifft im Allgemeinen ein System zum Verbessern der Zuverlässigkeit eines Stromnetzes und die prädiktive Analyse einer aggregierten Nachfrage und eines Angebots an Leistung.

Die Druckschrift EP 1 248 357 A2 betrifft eine Fehlervorhersage für Leistungsversorgungseinheiten und ein Überwachen von Parametern einer Leistungsversorgungseinheit und ein Analysieren dieser Parameter, um Warnhinweise zu erzeugen.

Die Druckschrift WO 2015/180766 A1 betrifft ein Verfahren zum Überwachen einer eine vernetzte Topologie aufweisenden Anlage, bei dem an einer Mehrzahl von Messstellen in der Anlage einen Zustand der Anlage an der jeweiligen Messstelle charakterisierende Messwerte erfasst werden, die erfassten Messwerte an eine Leitstelleneinrichtung übermittelt werden.

Es ist die Aufgabe der vorliegenden Erfindung, den Wartungsaufwand und die Stabilität eines Transport- und Verteilnetz zu verbessern.

Diese Aufgabe wird durch technische Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird diese Aufgabe durch ein Transport- und Verteilnetz gelöst, mit einer Mehrzahl von Einzelkomponenten mit jeweils einer Datenschnittstelle zum Übermitteln von Zustandsdaten der jeweiligen Einzelkomponente; und einer zentralen Auswertungseinrichtung zum Berechnen einer Ausfallwahrscheinlichkeit der Einzelkomponente auf Basis der Zustandsdaten, die ausgebildet ist, der Einzelkomponente eine vorgegebene Ausfallwahrscheinlichkeit zuzuweisen, falls die Zustandsdaten der Einzelkomponente außerhalb eines vorgegeben Bereiches liegen. Durch das Transport- und Verteilnetz wird an zentraler Stelle ersichtlich, welche Einzelkomponenten mit einem erhöhten Ausfallrisiko behaftet sind. Dies erleichtert eine Wartung und Instandhaltung des Transport- und Verteilnetzes. Insgesamt erhöht sich die Verfügbarkeit des Transport- und Verteilnetzes. Dadurch wird beispielsweise der technische Vorteil erreicht, dass die Ausfallwahrscheinlichkeiten der Einzelkomponenten mit wenigen Rechenschritten berechnet werden können.

In einer technisch vorteilhaften Ausführungsform des Transport- und Verteilnetzes ist die zentrale Auswertungseinrichtung ausgebildet, eine elektronische Nachricht zu erzeugen, falls die Ausfallwahrscheinlichkeit einer Einzelkomponente über einem vorgegebenen Wahrscheinlichkeitswert liegt. Dadurch wird beispielsweise der technische Vorteil erreicht, dass ein Benutzer unmittelbar über eine gestiegene Ausfallwahrscheinlichkeit informiert werden kann.

In einer weiteren technisch vorteilhaften Ausführungsform des Transport- und Verteilnetzes ist die zentrale Auswertungseinrichtung ausgebildet, den vorgegebenen Wahrscheinlichkeitswert individuell für jede Einzelkomponente zu bestimmen. So kann beispielsweise eine Nachricht erzeugt werden, wenn die Ausfallwahrscheinlichkeit für eine erste Komponente über einem ersten Wert liegt und die Ausfallwahrscheinlichkeit für eine zweite Komponente über einem zweiten Wert liegt. Dadurch wird beispielsweise der technische Vorteil erreicht, dass je nach Einzelkomponente unterschiedliche Wahrscheinlichkeitswerte verwendet werden können.

In einer weiteren technisch vorteilhaften Ausführungsform des Transport- und Verteilnetzes ist die Datenschnittstelle ausgebildet, die Zustandsdaten der jeweiligen Einzelkomponente über das Transport- und Verteilnetz zu übermitteln. Dadurch wird beispielsweise der technische Vorteil erreicht, dass sich die Zustandsdaten ohne zusätzliche Infrastruktur zur Datenübermittlung übermitteln lassen.

In einer weiteren technisch vorteilhaften Ausführungsform des Transport- und Verteilnetzes ist die Datenschnittstelle ausgebildet, die Zustandsdaten der jeweiligen Einzelkomponente über ein Mobilfunknetz zu übermitteln. Dadurch wird beispielsweise der technische Vorteil erreicht, dass die Zustandsdaten auch ohne drahtgebundene Anbindung an ein Rechnernetz übermittelt werden können.

In einer weiteren technisch vorteilhaften Ausführungsform des Transport- und Verteilnetzes ist die Datenschnittstelle ausgebildet, die Zustandsdaten der jeweiligen Einzelkomponente über Rechnernetz zu übermitteln. Dadurch wird beispielsweise der technische Vorteil erreicht, dass die Daten auf schnelle Weise übermittelt werden können. Das Rechnernetz ist beispielsweise das Internet.

Durch eine Datenschnittstelle, die Zustandsdaten über mindestens zwei unterschiedliche Infrastrukturen aus dem Transport- und Verteilnetz, dem Mobilfunknetz oder dem Rechnernetz übermitteln kann, kann eine Redundanz hergestellt werden. Auch bei Ausfall einer Infrastruktur, bleibt die Fähigkeit zur Übermittlung der Zustandsdaten an die zentrale Auswertungseinrichtung über die andere Infrastruktur erhalten.

In einer weiteren technisch vorteilhaften Ausführungsform des Transport- und Verteilnetzes dient das Transport- und Verteilnetz zur Verteilung von Stoffen, elektrischer Energie oder Informationen. Dadurch wird beispielsweise der technische Vorteil erreicht, dass besonders sensible Transport- und Verteilnetze verbessert werden können.

In einer weiteren technisch vorteilhaften Ausführungsform des Transport- und Verteilnetzes ist die zentrale Auswertungseinrichtung ausgebildet, ein Ausmaß eines Ausfalls einer Einzelkomponente zu bestimmen. Dadurch wird beispielsweise der technische Vorteil erreicht, dass Einzelkomponenten identifiziert werden können, deren Ausfall einen großen technischen Einfluss auf das Transport- und Verteilnetz hat.

In einer weiteren technisch vorteilhaften Ausführungsform des Transport- und Verteilnetzes ist die zentrale Auswertungseinrichtung ausgebildet, eine Ausfallwahrscheinlichkeit einer technischen Eigenschaft aus mehreren technischen Eigenschaften der Einzelkomponente zu bestimmen. Dadurch wird beispielsweise der technische Vorteil erreicht, dass eine differenzierte Berechnung der Ausfallwahrscheinlichkeit erzielt wird.

In einer weiteren technisch vorteilhaften Ausführungsform des Transport- und Verteilnetzes ist die zentrale Auswertungseinrichtung ausgebildet, eine Gesamtausfallwahrscheinlichkeit auf Basis mehrerer technischen Eigenschaften der jeweiligen Einzelkomponente zu bestimmen. Dadurch wird beispielsweise der technische Vorteil erreicht, dass eine summarische Ausfallwahrscheinlichkeit auf Basis von einzelnen Ausfallwahrscheinlichkeiten technischer Eigenschaften gewonnen werden kann.

In einer weiteren technisch vorteilhaften Ausführungsform des Transport- und Verteilnetzes ist die zentrale Auswertungseinrichtung ausgebildet, die Zustandsdaten der jeweiligen Einzelkomponenten aus mehreren Datenbanken abzufragen. Dadurch wird beispielsweise der technische Vorteil erreicht, dass eine umfassende und schnelle Auswertung der Zustandsdaten ermöglicht wird.

Gemäß einem zweiten Aspekt wird diese Aufgabe durch eine Auswertungseinrichtung für ein Transport- und Verteilnetz gelöst, mit einer Datenschnittstelle zum Empfangen von Zustandsdaten von einer Vielzahl an Einzelkomponenten des Transport- und Verteilnetzes und einer Berechnungseinrichtung zum Berechnen einer Ausfallwahrscheinlichkeit der Einzelkomponenten auf Basis der Zustandsdaten, wobei die Auswertungseinrichtung ausgebildet ist, der Einzelkomponente eine vorgegebene Ausfallwahrscheinlichkeit zuzuweisen, falls die Zustandsdaten der Einzelkomponente außerhalb eines vorgegeben Bereiches liegen. Durch die Auswertungseinrichtung werden die gleichen technischen Vorteile wie durch das Transport- und Verteilnetz nach dem ersten Aspekt gewonnen.

Gemäß einem dritten Aspekt wird diese Aufgabe durch ein Verfahren zum Betreiben eines Transport- und Verteilnetzes gelöst, mit den Schritten eines Übermittelns von Zustandsdaten einer Mehrzahl von Einzelkomponenten mit jeweils einer Datenschnittstelle an eine zentrale Auswertungseinrichtung; eines Berechnens einer Ausfallwahrscheinlichkeit der Einzelkomponente auf Basis der Zustandsdaten in der zentralen Auswertungseinrichtung; und Zuweisen einer vorgegebenen Ausfallwahrscheinlichkeit zu der Einzelkomponente, falls die Zustandsdaten der Einzelkomponente außerhalb eines vorgegeben Bereiches liegen. Durch das Verfahren werden die gleichen technischen Vorteile wie durch das Transport- und Verteilnetz nach dem ersten Aspekt gewonnen.

In einer technisch vorteilhaften Ausführungsform des Verfahrens werden die Zustandsdaten über das Transport- und Verteilnetz übermittelt. Dadurch wird beispielsweise ebenfalls der technische Vorteil erreicht, dass sich die Zustandsdaten ohne zusätzliche Infrastruktur zur Datenübermittlung übermitteln lassen.

In einer weiteren technisch vorteilhaften Ausführungsform des Verfahrens werden die Zustandsdaten über ein Mobilfunknetz übermittelt. Dadurch wird beispielsweise ebenfalls der technische Vorteil erreicht, dass die Zustandsdaten auch ohne drahtgebundene Anbindung an ein Rechnernetz übermittelt werden können.

In einer weiteren technisch vorteilhaften Ausführungsform des Verfahrens werden die Zustandsdaten über ein Rechnernetz übermittelt. Dadurch wird beispielsweise der technische Vorteil erreicht, dass die Daten auf schnelle Weise übermittelt werden können.

Ausführungsbeispiele der Erfindung sind in den Zeichnungen dargestellt und werden im Folgenden näher beschrieben.

Es zeigen:

Fig. 1    eine schematische Ansicht eines elektrischen Transport- und Verteilnetzes;

Fig. 2    einen Systemüberblick;

Fig. 3    eine Vergrößerungsansicht und eine Visualisierung von Kundenanschlüssen und Niederspannungsleitungen; und

Fig. 4    ein Blockdiagramm des Verfahrens.

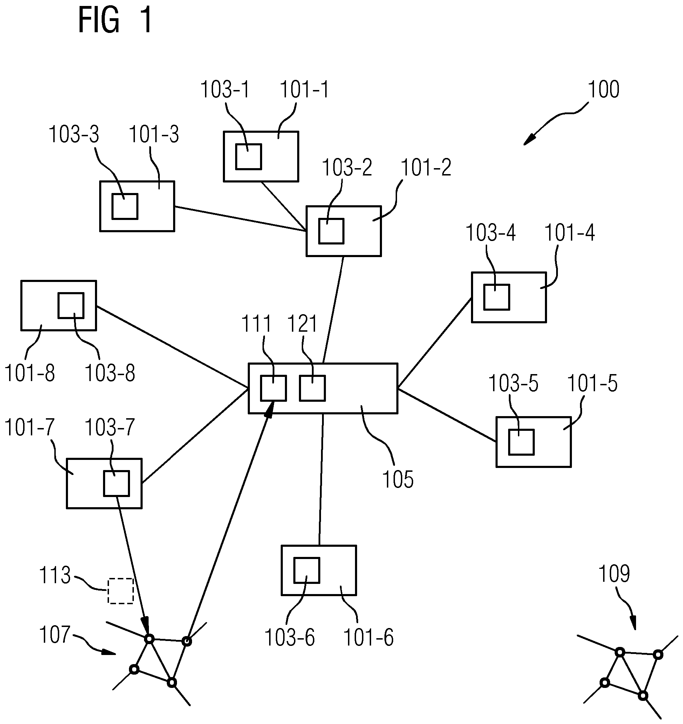

Fig. 1 zeigt eine schematische Ansicht eines elektrischen Transport- und Verteilnetzes 100. Das elektrische Transport- und Verteilnetz 100 umfasst eine Mehrzahl von Einzelkomponenten 101-1, ..., 101-n, wie beispielsweise Leitungen, Transformatoren, Umspanneinrichtungen, Windkraftanlagen oder Kraftwerke. Im Allgemeinen kann eine Einzelkomponente 101-1, ..., 101-n durch jede technische Komponente des Transport- und Verteilnetzes 100 gebildet sein.

Die Einzelkomponenten 101-1, ..., 101-n übermitteln Zustandsdaten 113 an eine zentrale Auswertungseinrichtung 105, so dass die Auswertungseinrichtung 105 eine Ausfallwahrscheinlichkeit der jeweiligen Einzelkomponente 101-1, ..., 101-n auf Basis der Zustandsdaten berechnen kann. Die Zustandsdaten 113 umfassen Daten über eine technische Eigenschaft der jeweiligen Einzelkomponente 101-1, ..., 101-n.

Zum Zweck der Übermittlung umfasst jede Einzelkomponente 101-1, ..., 101-n eine entsprechende Datenschnittstelle 103-1, ..., 103-n, die die Zustandsdaten 113 beispielsweise über das Transport- und Verteilnetz 100, ein Mobilfunknetz 107 oder ein Rechnernetz 109 senden und empfangen kann.

Zur Verarbeitung der Zustandsdaten 113 umfasst die Auswertungseinrichtung 105 beispielsweise einen Prozessor und einen Datenspeicher als Berechnungseinrichtung 121. Die Auswertungseinrichtung 105 kann durch einen Computer gebildet sein. Zudem umfasst die Auswertungseinrichtung 105 eine Datenschnittstelle 111 zum Empfangen der Zustandsdaten 113 von einer Vielzahl der Einzelkomponenten 101-1, ..., 101-n.

Zur Berechnung der Ausfallwahrscheinlichkeit einer der Einzelkomponenten 101-1, ..., 101-n können vielfältige Zustandsdaten 113 berücksichtigt werden, wie beispielsweise Zustandsdaten 113 über: einen Typ der Einzelkomponente (Leitung, Transformator), Alter der Einzelkomponente, technische Eigenschaften der Einzelkomponente (Nennleistung, Maximalleistung, Veränderungen in Abhängigkeit von der Außentemperatur), vergangene Betriebsparameter der Einzelkomponente (Dauer, Anzahl und Schweregrad der Grenzwertverletzungen; Auslastung), Topologie des elektrischen Transport- und Verteilnetzes 100 (Spannungsebene, Wichtigkeit der Einzelkomponente für die Netzstabilität, Vorhandensein von redundanten Einzelkomponenten), geographischer Kontext der Einzelkomponente (Land/Stadt; Einfluss von Wettersituationen), Einfluss der Einzelkomponente auf die Versorgungssicherheit (wie viele und welche Kunden, wären von einem möglichen Ausfall betroffen), und/oder tatsächliche Lasten und Nutzungsmuster der Einzelkomponente. Dazu können Zustandsdaten 113 aus verschiedenen Systemen (Big Data) zusammengeführt werden, um wechselseitige Abhängigkeiten zu erkennen.

Die Ausfallwahrscheinlichkeit der Einzelkomponenten 101-1, ..., 101-n wird somit anhand der technischen Eigenschaften und Zustandsdaten 113 quantifiziert, die aus unterschiedlichen Informationsquellen in elektrischen Kontext und Business-Kontext gewonnen werden. Aus den Zustandsdaten 113 lassen sich Rückschlüsse auf einzelne Einflussfaktoren zwischen den Einzelkomponenten 101-1, ..., 101-n ziehen. Diese Einflussfaktoren können parametrisiert werden. Dadurch lässt sich die Auswirkung oder das Ausmaß einer Ausfallwahrscheinlichkeit identifizieren, beispielsweise wie viele Haushalte oder Abnehmer von einem Ausfall der jeweiligen Einzelkomponente 101-1, ..., 101-n betroffen wären. Zudem lässt sich eine geographische Lage der Ausfallwahrscheinlichkeit im elektrischen Transport- und Verteilnetz 100 bestimmen und auf einer Karte des elektrischen Transport- und Verteilnetz 100 anzeigen.

Die Eigenschaften der technischen Einzelkomponenten 101-1, ..., 101-n des elektrischen Transport- und Verteilnetzes 100 können somit in deren geographischem oder topologischem Kontext bewertet werden, so dass Entscheidungen über einen Austausch von Einzelkomponenten 101-1, ..., 101-n auf einfache Weise anhand der Ausfallwahrscheinlichkeit getroffen werden können.

Für eine Kombination der Faktoren ist eine große Flexibilität gegeben, da die Faktoren je nach Netzbereich und konkreter Analysefragestellung unterschiedlich zueinander in Bezug gesetzt und gegeneinander abgewogen werden können. Zudem kann die technische Konfiguration der Risikobewertung durch einen Benutzer angepasst werden.

Die Darstellung der Ausfallwahrscheinlichkeiten und der Zustandsdaten 113 der Einzelkomponente 101-1, ..., 101-n erfolgt in der zentralen Auswertungseinrichtung 105 auf intuitive Weise, so dass deren Zusammenhänge erkennbar sind.

Durch das Transport- und Verteilnetz 100 lässt sich die Ausfallwahrscheinlichkeit von Einzelkomponenten 101-1, ..., 101-n, wie beispielsweise Kabeln, Transformatoren, Unterstationen analysieren, um fundiert entscheiden zu können, wo und wie ein technischer Netzausbau erfolgen sollte. Der technische Netzausbau kann durch Installation neuer Messgeräte oder durch Austausch von vorhandenen Transformatoren und Leitungen als Einzelkomponenten 101-1, ..., 101-n erfolgen.

Durch die Berechnung der jeweiligen Ausfallwahrscheinlichkeiten kann eine Netzausbauplanung unterstützt werden, um für zukünftige Änderungen vorbereitet zu sein, wie beispielsweise einem geplanten Ausbau einer Photovoltaik-Einspeisung für bestimmte Netzgebiete oder eine Anpassung des Transport- und Verteilnetz 100 an einen erwarteten zukünftigen Bedarf.

Das Transport- und Verteilnetz 100 ermöglicht die Planung von präventiven Wartungsarbeiten, bevor es zu Störungen aufgrund von Ausfällen kommt. Zudem kann eine operative Planung von konkreten Wartungsarbeiten unter Berücksichtigung der individuellen Ausfallwahrscheinlichkeit von Einzelkomponenten 101-1, ..., 101-n auch unter Berücksichtigung von meteorologischen Rahmenbedingungen oder bestimmten Abnehmern durchgeführt werden, die vertraglich eine hohe Versorgungssicherheit zugesichert bekommen haben.

Durch die zentrale Sammlung der Zustandsdaten 113 vieler unterschiedlicher Einzelkomponenten 101-1, ..., 101-n ist eine nachvollziehbare Logik der Auswertung möglich. Generelle Abhängigkeiten technischer Eigenschaften der Einzelkomponenten 101-1, ..., 101-n können identifiziert werden. Die Auswertung kann an die speziellen lokalen Gegebenheiten des Transport- und Verteilnetzes 100 angepasst werden. Durch die Darstellung der Ergebnisse können Rückschlüsse auf einzelne Einflussfaktoren gezogen werden. Dadurch kann ein statistisches Verfahren unterstützt werden, das es erlaubt den elektrischen und geographischen Kontext der Einzelkomponenten abzubilden. Die gewonnenen Aussagen über eine Ausfallwahrscheinlichkeit sind für bestimmte Einzelkomponenten 101-1, ..., 101-n spezifisch und können auf einen bestimmten Netzbereich oder eine konkrete Einzelkomponente 101-1, ..., 101-n übertragen werden, so dass sich konkrete Handlungsoptionen ableiten lassen. Eine Gewichtung von Faktoren kann fortlaufend erfolgen und durch den Netzbetreiber angepasst werden, so dass regelmäßige dynamische Analysen des Netzbetreibers unterstützt werden.

Im Allgemeinen kann nicht nur die Information einer Datenquelle ausgewertet werden, sondern die Zustandsdaten 113 aus einer Vielzahl von Datenquellen, wie beispielsweise Datenbanken (SCADA, Outage-Management, Customer-Information-System, Meter-Data-Management, Asset-Management), können in der zentralen Auswertungseinrichtung 105 abgefragt und zusammengeführt werden. In der zentralen Auswertungseinrichtung 105 wird eine Darstellung der Zustandsdaten 113 aus den verschiedenen Datenquellen in einer integrierten Ansicht ermöglicht. Dadurch lassen sich mehrere Eigenschaften unterschiedlicher Einzelkomponenten 101-1, ..., 101-n zueinander in Bezug setzen. Zudem können in der Auswertungseinrichtung 105 verschiedene Ansichten des elektrischen Transport- und Verteilnetzes 100 auf Basis unterschiedlicher Zustandsdaten 113 erzeugt werden, ohne dass der geographische und elektrische Kontext verloren geht und eine Auswirkung der Ausfallwahrscheinlichkeit beurteilt werden kann. Die Einzelkomponenten 101-1, ..., 101-n können durch die Auswertungseinrichtung 105 gleichzeitig analysiert werden. In der Auswertungseinrichtung 105 kann ein Benutzer mit den Zustandsdaten 113 interagieren, um beispielsweise die Gewichtung von Faktoren zu ändern.

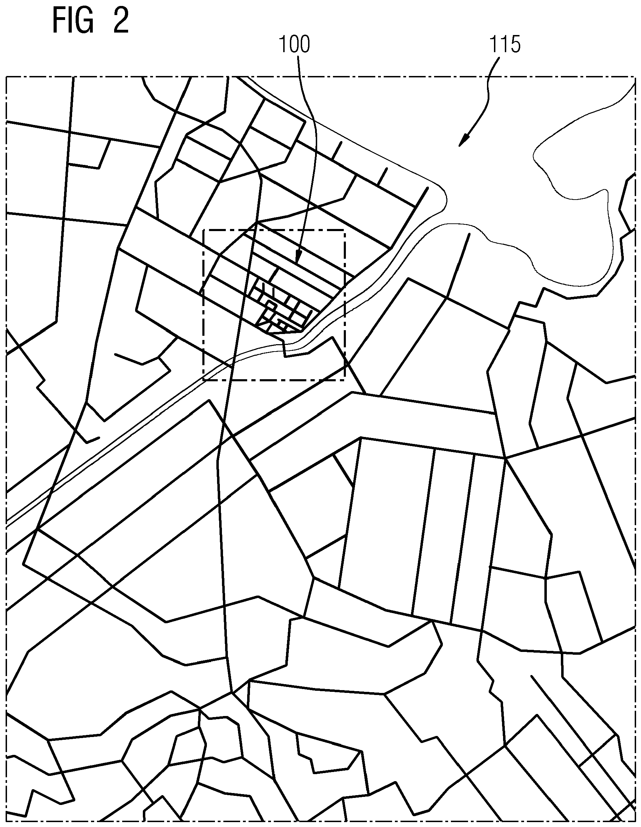

Fig. 2 zeigt einen Systemüberblick und eine Struktur des Transport- und Verteilnetzes 100. Die Darstellung der Zustandsdaten 113 erfolgt farblich auf einer geographischen Karte 115 in Verbindung mit topologischen Zusammenhängen, wie beispielsweise einer Zugehörigkeit der Einzelkomponenten 101-1, ..., 101-n zu Spannungsebenen oder einer Verbindung zu anderen Einzelkomponenten 101-1, ..., 101-n.

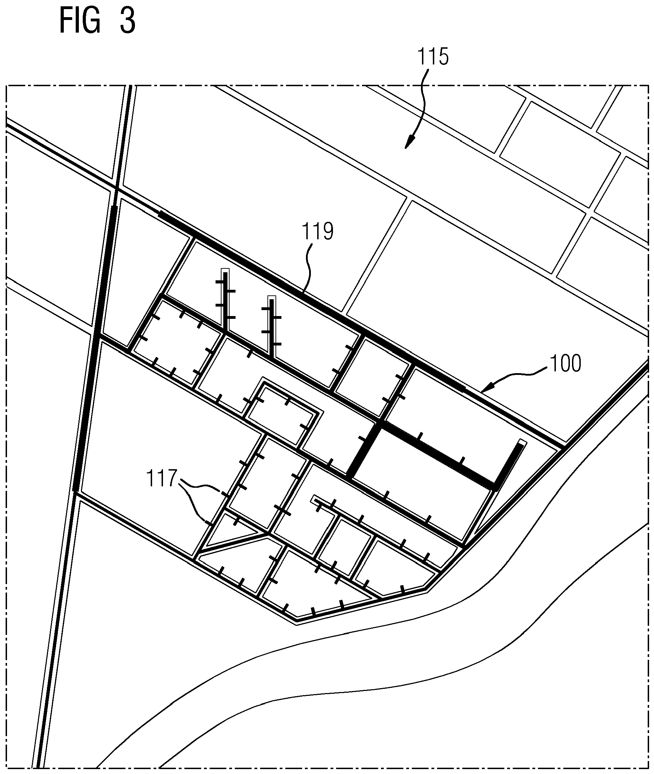

Fig. 3 zeigt eine Vergrößerungsansicht und eine Visualisierung von Kundenanschlüssen 117 und Niederspannungsleitungen 119. In dieser Ansicht ist ein Setzen verschiedener Parameter möglich, die die Berechnung der Ausfallwahrscheinlichkeit von technischen Eigenschaften der Einzelkomponenten 101-1, ..., 101-n, wie beispielsweise ein Alter oder eine Überlastdauer, und deren visuelle Darstellung beeinflussen. Dadurch können Rückschlüsse auf einzelne Einflussfaktoren gezogen werden und diese parametrisiert werden. Dieses Konzept lässt sich um Smart-Meter-Zustandsdaten erweitern.

Jede technische Eigenschaft einer Einzelkomponente 101-1, ..., 101-n wird anhand von vorgegebenen Grenzwerten für den Wahrscheinlichkeitswert auf deren Verletzung hin geprüft und beispielsweise in eine "keine", "leichte" und "schwere" Verletzung klassifiziert. Beispielsweise weisen Stromkabel des elektrischen Transport- und Verteilnetzes 100, die jünger als 20 Jahre sind, keine Ausfallwahrscheinlichkeit auf, Stromkabel, die älter als 20 Jahre sind, eine mittlere Ausfallwahrscheinlichkeit, und Stromkabel, die älter als 40 Jahre sind, eine hohe Ausfallwahrscheinlichkeit.

Außerordentlich hohe Belastungen einer Einzelkomponente 101-1, ..., 101-n verursachen eine höhere Ausfallwahrscheinlichkeit als ein Betrieb innerhalb der Nennwerte. Alle Wahrscheinlichkeitswerte, mit denen die Ausfallwahrscheinlichkeit der jeweiligen Einzelkomponente 101-1, ..., 101-n verglichen wird, sind durch einen Benutzer als Parameter einstellbar.

Entsprechend der gesetzten Parameter können die technischen Einzelkomponenten 101-1, ..., 101-n, wie Kabel oder Stationen, eingefärbt werden, so dass ein schneller Überblick über die technischen Eigenschaften im geographischen und topologischen Kontext der Einzelkomponenten 101-1, ..., 101-n erreicht wird.

Aus den Zustandsdaten 113 wird eine Ausfallwahrscheinlichkeit für jede technische Einzelkomponente 101-1, ..., 101-n berechnet, die sich aus einer Risikobewertung einzelner technischen Eigenschaften gemäß Formel (1) zusammensetzt.

$$R(x_{age}) = \begin{cases} \propto \ wenn \ x_{age} < t_{age1} \\ 0.5 \propto \ wenn \ t_{age1} \leq x_{age} < t_{age2} \\ 0 \ sonst \end{cases}$$

$$R(x_{load}) = \begin{cases} \beta \ wenn \ x_{load} > t_{load1} \\ 0.5\beta \ wenn \ t_{load1} \geq x_{load} > t_{load2} \\ 0 \ sonst \end{cases}$$

$$R(x) = \sum_{i \ in \ E} R_{\propto,\beta,...}(x_i) \mid \alpha + \beta + \cdots = 1$$

$$I(x) = Wichtigkeit \ Kunden \ \times Anzahl \ Kunden$$

$$A(x) = R(x) \cdot I(x)$$

$$(1)$$

Das Ausfallrisiko ($\alpha$, $\beta$, ...) einer technischen Eigenschaft $i$, beispielsweise des Alters (age) oder der Last (load), wird anhand von Grenzwerten t eingeschätzt. Die Gesamtausfallwahrscheinlichkeit $R$ aller technischen Eigenschaften $i$ einer Einzelkomponente $x$ ergibt sich aus der Summe der Einzelausfallwahrscheinlichkeiten $R_{\alpha,\beta..}$. Das Ausmaß der Ausfallwahrscheinlichkeit $A$ einer Einzelkomponente wird anhand einer Wichtigkeitsfunktion, wie zum Beispiel auf Basis der Anzahl von angeschlossenen Kunden und deren Wichtigkeit bestimmt.

Ein Benutzer kann die Werte, der in die Formel (1) einfließenden Parameter, interaktiv anpassen und eine direkte Rückmeldung vom System erhalten. Die exakte Formel (1) ist hierbei beispielshaft zu verstehen. Im Allgemeinen kann diese bei einer Weiterentwicklung des Systems verändert werden oder an bestimmte Anforderungen angepasst werden.

Das System kann eine umfassende Sicht auf die empfangenen Zustandsdaten 113 der Einzelkomponenten 101-1, ..., 101-n in deren topologischen und geographischen Kontext bereitstellen. Dadurch werden Zusammenhänge zwischen einzelnen Faktoren deutlich und die Auswirkungen bestimmter Entscheidungen auf die elektrischen Einzelkomponenten 101-1, ..., 101-n können abgeschätzt werden. Durch eine einfach verständliche Visualisierung der Risikoanalyse mittels Farbe oder Helligkeit wird die für Entscheidungen erforderliche Transparenz erreicht.

Durch die Parametrisierung einzelner Eigenschaften kann die Bewertung der Ausfallwahrscheinlichkeit an die aktuelle Situation und an die herrschenden Bedingungen des Transport- und Verteilnetz 100 angepasst werden. Zu diesem Zweck kann eine flexible Einbindung von Datenarten und -quellen erfolgen. Beispielsweise können Smart-Meter-Daten als Zustandsdaten 113 verwendet werden, um eine Auslastung der Niederspannungskabel in einer Analyse zu berücksichtigen.

Der Vorteil eines solchen Systems für den Netzbetreiber besteht darin, dass gezielt entschieden werden kann, an welchen Stellen des Transport- und Verteilnetzes 100 Ausfälle drohen. Durch einen gezielten Austausch von Einzelkomponenten 101-1, ..., 101-n mit erhöhter Ausfallwahrscheinlichkeit lassen sich die Netzsicherheit und -Stabilität bei gleichbleibendem technischen Aufwand erhöhen.

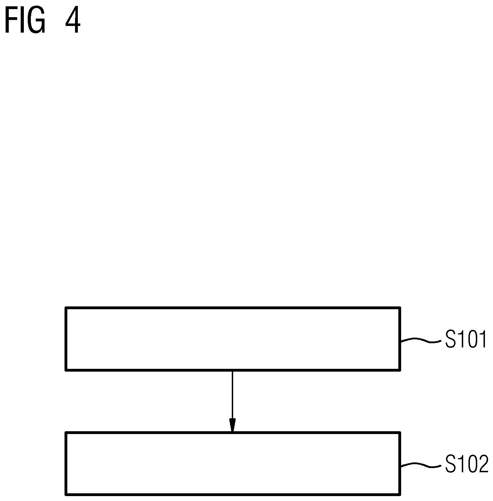

Fig. 4 zeigt ein Blockdiagramm des Verfahrens zum Betreiben des Transport- und Verteilnetzes 100. Das Verfahren umfasst den Schritt S101 eines Sendens von Zustandsdaten 113 der Mehrzahl von Einzelkomponenten 101-1, ..., 101-n, mit jeweils einer Datenschnittstelle 103-1, ..., 103-n an die zentrale Auswertungseinrichtung 105; und den Schritt S102 eines Berechnens einer Ausfallwahrscheinlichkeit jeder Einzelkomponente 101-1, ..., 101-n auf Basis der Zustandsdaten 113 in der zentralen Auswertungseinrichtung 105.

Das am Beispiel von Stromnetzen beschriebene Prinzip des Transport- und Verteilnetzes 100 kann auch auf andere Transport- und Verteilnetze angewandt werden, wie beispielsweise eine Verkehrsüberwachung, eine Industrieautomatisierung, eine Kraftwerksüberwachung, einen Schienenverkehr, eine Wasserversorgung oder ein Gasnetz.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

**Patentansprüche**

1.  Transport- und Verteilnetz (100), mit:

    - einer Mehrzahl von Einzelkomponenten (101-1, ..., 101-n) mit jeweils einer Datenschnittstelle (103-1, ..., 103-n) zum Übermitteln von Zustandsdaten (113) der jeweiligen Einzelkomponente (101-1, ..., 101-n); und
    - einer zentralen Auswertungseinrichtung (105) zum Berechnen einer Ausfallwahrscheinlichkeit der Einzelkomponente (101-1, ..., 101-n) auf Basis der Zustandsdaten (113), die ausgebildet ist, der Einzelkomponente (101-1, ..., 101-n) eine vorgegebene Ausfallwahrscheinlichkeit zuzuweisen, falls die Zustandsdaten (113) der Einzelkomponente (101-1, ..., 101-n) außerhalb eines vorgegeben Bereiches liegen.

2.  Transport- und Verteilnetz (100) nach Anspruch 1, wobei die zentrale Auswertungseinrichtung (105) ausgebildet ist, eine elektronische Nachricht zu erzeugen, falls die Ausfallwahrscheinlichkeit einer Einzelkomponente (101-1, ..., 101-n) über einem vorgegebenen Wahrscheinlichkeitswert liegt.

3.  Transport- und Verteilnetz (100) nach Anspruch 2, wobei die zentrale Auswertungseinrichtung (105) ausgebildet ist, den vorgegebenen Wahrscheinlichkeitswert individuell für jede Einzelkomponente (101-1, ..., 101-n) zu bestimmen.

4.  Transport- und Verteilnetz (100) nach einem der vorangehenden Ansprüche, wobei die Datenschnittstelle (103-1, ..., 103-n) ausgebildet ist, die Zustandsdaten (113) der jeweiligen Einzelkomponente (101-1, ..., 101-n) über das Transport- und Verteilnetz (100) zu übermitteln.

5.  Transport- und Verteilnetz (100) nach einem der vorangehenden Ansprüche, wobei die Datenschnittstelle (103-1, ..., 103-n) ausgebildet ist, die Zustandsdaten (113) der jeweiligen Einzelkomponente (101-1, ..., 101-n) über ein Mobilfunknetz (107) zu übermitteln.

6.  Transport- und Verteilnetz (100) nach einem der vorangehenden Ansprüche, wobei die Datenschnittstelle (103-1, ..., 103-n) ausgebildet ist, die Zustandsdaten (113) der jeweiligen Einzelkomponente (101-1, ..., 101-n) über Rechnernetz (109) zu übermitteln.

7.  Transport- und Verteilnetz (100) nach einem der vorangehenden Ansprüche, wobei das Transport- und Verteilnetz (100) zur Verteilung von Stoffen, elektrischer Energie oder Informationen dient.

8.  Transport- und Verteilnetz (100) nach einem der vorangehenden Ansprüche, wobei die zentrale Auswertungseinrichtung (105) ausgebildet ist, ein Ausmaß eines Ausfalls einer Einzelkomponente (101-1, ..., 101-n) zu bestimmen.

9.  Transport- und Verteilnetz (100) nach einem der vorangehenden Ansprüche, wobei die zentrale Auswertungseinrichtung (105) ausgebildet ist, die jeweiligen Zustandsdaten der Einzelkomponenten (101-1, ..., 101-n) aus mehreren Datenbanken abzufragen.

10. Auswertungseinrichtung (103) für ein Transport- und Verteilnetz (100), mit:

    einer Datenschnittstelle (111) zum Empfangen von Zustandsdaten (113) von einer Vielzahl an Einzelkomponenten (101-1, ..., 101-n) des Transport- und Verteilnetzes (100); und
    einer Berechnungseinrichtung (121) zum Berechnen einer Ausfallwahrscheinlichkeit der Einzelkomponenten (101-1, ..., 101-n) auf Basis der Zustandsdaten (113), wobei die Auswertungseinrichtung (103) ausgebildet ist, der jeweiligen Einzelkomponente (101-1, ..., 101-n) eine vorgegebene Ausfallwahrscheinlichkeit zuzuweisen, falls die Zustandsdaten (113) der Einzelkomponente (101-1, ..., 101-n) außerhalb eines vorgegeben Bereiches liegen.

11. Verfahren zum Betreiben eines Transport- und Verteilnetzes; mit den Schritten:

    Übermitteln (S101) von Zustandsdaten (113) einer Mehrzahl von Einzelkomponenten (101-1, ..., 101-n) mit jeweils einer Datenschnittstelle (103-1, ..., 103-n) an eine zentrale Auswertungseinrichtung (105); und

Berechnen (S102) einer Ausfallwahrscheinlichkeit der jeweiligen Einzelkomponente (101-1, ..., 101-n) auf Basis der Zustandsdaten (113) in der zentralen Auswertungseinrichtung (105), und

Zuweisen einer vorgegebenen Ausfallwahrscheinlichkeit zu der Einzelkomponente (101-1, ..., 101-n), falls die Zustandsdaten (113) der Einzelkomponente (101-1, ..., 101-n) außerhalb eines vorgegeben Bereiches liegen.

12. Verfahren nach Anspruch 11, wobei die Zustandsdaten (113) über das das Transport- und Verteilnetz (100) übermittelt werden.

13. Verfahren nach Anspruch 11 oder 12, wobei die Zustandsdaten (113) über ein Mobilfunknetz (107) übermittelt werden.

14. Verfahren nach einem der Ansprüche 11 bis 13, wobei die Zustandsdaten (113) über ein Rechnernetz (109) übermittelt werden.

**Claims**

1. Transport and distribution network (100) having:

   - a plurality of individual components (101-1, ..., 101-n) each having a data interface (103-1, ..., 103-n) for transmitting state data (113) relating to the respective individual component (101-1, ..., 101-n); and
   - a central evaluation device (105) for calculating a failure probability of the individual component (101-1, ..., 101-n) on the basis of the state data (113), which evaluation device is designed to assign a predefined failure probability to the individual component (101-1, ..., 101-n) if the state data (113) relating to the individual component (101-1, ..., 101-n) are outside a predefined range.

2. Transport and distribution network (100) according to Claim 1, wherein the central evaluation device (105) is designed to generate an electronic message if the failure probability of an individual component (101-1, ..., 101-n) is above a predefined probability value.

3. Transport and distribution network (100) according to Claim 2, wherein the central evaluation device (105) is designed to individually determine the predefined probability value for each individual component (101-1, ..., 101-n).

4. Transport and distribution network (100) according to one of the preceding claims, wherein the data interface (103-1, ..., 103-n) is designed to transmit the state data (113) relating to the respective individual component (101-1, ..., 101-n) via the transport and distribution network (100).

5. Transport and distribution network (100) according to one of the preceding claims, wherein the data interface (103-1, ..., 103-n) is designed to transmit the state data (113) relating to the respective individual component (101-1, ..., 101-n) via a mobile radio network (107).

6. Transport and distribution network (100) according to one of the preceding claims, wherein the data interface (103-1, ..., 103-n) is designed to transmit the state data (113) relating to the respective individual component (101-1, ..., 101-n) via a computer network (109).

7. Transport and distribution network (100) according to one of the preceding claims, wherein the transport and distribution network (100) is used to distribute materials, electrical energy or information.

8. Transport and distribution network (100) according to one of the preceding claims, wherein the central evaluation device (105) is designed to determine an extent of a failure of an individual component (101-1, ..., 101-n).

9. Transport and distribution network (100) according to one of the preceding claims, wherein the central evaluation device (105) is designed to retrieve the respective state data relating to the individual components (101-1, ..., 101-n) from a plurality of databases.

10. Evaluation device (103) for a transport and distribution network (100), having:

    a data interface (111) for receiving state data (113) from a multiplicity of individual components (101-1, ..., 101-n) of the transport and distribution network (100); and

a calculation device (121) for calculating a failure probability of the individual components (101-1, ..., 101-n) on the basis of the state data (113), wherein the evaluation device (103) is designed to assign a predefined failure probability to the respective individual component (101-1, ..., 101-n) if the state data (113) relating to the individual component (101-1, ..., 101-n) are outside a predefined range.

11. Method for operating a transport and distribution network, having the steps of:

transmitting (S101) state data (113) relating to a plurality of individual components (101-1, ..., 101-n) to a central evaluation device (105) using a data interface (103-1, ..., 103-n) in each case; and

calculating (S102) a failure probability of the respective individual component (101-1, ..., 101-n) on the basis of the state data (113) in the central evaluation device (105), and

assigning a predefined failure probability to the individual component (101-1, ..., 101-n) if the state data (113) relating to the individual component (101-1, ..., 101-n) are outside a predefined range.

12. Method according to Claim 11, wherein the state data (113) are transmitted via the transport and distribution network (100).

13. Method according to Claim 11 or 12, wherein the state data (113) are transmitted via a mobile radio network (107).

14. Method according to one of Claims 11 to 13, wherein the state data (113) are transmitted via a computer network (109).

**Revendications**

1. Réseau de transport et de distribution (100), comportant :

une pluralité de composants individuels (101-1, ..., 101-n) avec respectivement une interface de données (103-1, ..., 103-n) pour transmettre des données d'état (113) du composant individuel respectif (101-1, ..., 101-n) ; et

un dispositif d'évaluation central (105) pour calculer une probabilité de défaillance du composant individuel (101-1, ..., 101-n) sur la base des données d'état (113), lequel est conçu pour affecter une probabilité de défaillance donnée au composant individuel (101-1, ..., 101-n) si les données d'état (113) du composant individuel (101-1, ..., 101-n) se situent en dehors d'une plage donnée.

2. Réseau de transport et de distribution (100) selon la revendication 1, le dispositif d'évaluation central (105) étant conçu pour générer un message électronique si la probabilité de défaillance d'un composant individuel (101-1, ..., 101-n) est supérieure à une valeur de probabilité donnée.

3. Réseau de transport et de distribution (100) selon la revendication 2, le dispositif d'évaluation central (105) étant conçu pour déterminer la valeur de probabilité donnée individuellement pour chaque composant individuel (101-1, ..., 101-n).

4. Réseau de transport et de distribution (100) selon l'une des revendications précédentes, l'interface de données (103-1, ..., 103-n) étant conçue pour transmettre les données d'état (113) du composant individuel respectif (101-1, ..., 101-n) sur le réseau de transport et de distribution (100).

5. Réseau de transport et de distribution (100) selon l'une des revendications précédentes, l'interface de données (103-1, ..., 103-n) étant conçue pour transmettre les données d'état (113) du composant individuel respectif (101-1, ..., 101-n) sur un réseau radio mobile (107).

6. Réseau de transport et de distribution (100) selon l'une des revendications précédentes, l'interface de données (103-1, ..., 103-n) étant conçue pour transmettre les données d'état (113) du composant individuel respectif (101-1, ..., 101-n) sur un réseau d'ordinateurs (109).

7. Réseau de transport et de distribution (100) selon l'une des revendications précédentes, le réseau de transport et de distribution (100) servant à la distribution de matières, d'énergie électrique ou d'informations.

8. Réseau de transport et de distribution (100) selon l'une des revendications précédentes, le dispositif d'évaluation central (105) étant conçu pour déterminer une ampleur d'une défaillance d'un composant individuel (101-1, ..., 101-n).

9. Réseau de transport et de distribution (100) selon l'une des revendications précédentes, le dispositif d'évaluation central (105) étant conçu pour demander les données d'état respectives des composants individuels (101-1, ..., 101-n) à plusieurs bases de données.

10. Dispositif d'évaluation (103) pour un réseau de transport et de distribution (100), comportant :

une interface de données (111) pour recevoir des données d'état (113) d'une pluralité de composants individuels (101-1, ..., 101-n) du réseau de transport et de distribution (100) ; et
un dispositif de calcul (121) pour calculer une probabilité de défaillance des composants individuels (101-1, ..., 101-n) sur la base des données d'état (113), le dispositif d'évaluation (103) étant conçu pour affecter une probabilité de défaillance donnée au composant individuel respectif (101-1, ..., 101-n) si les données d'état (113) du composant individuel (101-1, ..., 101-n) se situent en dehors d'une plage donnée.

11. Procédé d'exploitation d'un réseau de transport et de distribution, comportant les étapes suivantes :

transmission (S101) de données d'état (113) d'une pluralité de composants individuels (101-1, ..., 101-n) avec respectivement une interface de données (103-1, ..., 103-n) à un dispositif d'évaluation central (105) et
calcul (S102) d'une probabilité de défaillance du composant individuel respectif (101-1, ..., 101-n) sur la base des données d'état (113) dans le dispositif d'évaluation central (105) et
affectation d'une probabilité de défaillance donnée au composant individuel (101-1, ..., 101-n) si les données d'état (113) du composant individuel (101-1, ..., 101-n) se situent en dehors d'une plage donnée.

12. Procédé selon la revendication 11, les données d'état (113) étant transmises sur le réseau de transport et de distribution (100).

13. Procédé selon la revendication 11 ou 12, les données d'état (113) étant transmises sur un réseau radio mobile (107).

14. Procédé selon l'une des revendications 11 à 13, les données d'état (113) étant transmises sur un réseau d'ordinateurs (109).

FIG 1

FIG 2

FIG 3

FIG 4

```
┌─────────────────────────────────────────┐
│                                         │──── S101
└─────────────────────────────────────────┘
                    │
                    ▼
┌─────────────────────────────────────────┐
│                                         │──── S102
└─────────────────────────────────────────┘
```

**IN DER BESCHREIBUNG AUFGEFÜHRTE DOKUMENTE**

**In der Beschreibung aufgeführte Patentdokumente**

- US 2014281645 A1
- EP 1248357 A2

- WO 2015180766 A1